# FASCICULE DE BREVET EUROPEEN

(11) **EP 1 085 364 B1**
(45) Date de publication et mention de la délivrance du brevet: **18.07.2007**
(21) Numéro de dépôt: 99118167.8
(22) Date de dépôt: 13.09.1999
(51) Int. Cl.: G02F 1/1335, G02F 1/1347, G04G 9/00

(54) **Ensemble d'affichage comprenant deux dispositifs d'affichage superposés**
Anzeigeeinheit mit zwei übereinander angeordneten Anzeigenvorrichtungen
Display ensemble comprising two stacked display devices

(43) Date de publication de la demande: 21.03.2001
(73) Titulaire: ASULAB S.A., CH-2501 Bienne (CH)
(72) Inventeur: Basturk, Naci, 2073 Enges (CH)
(74) Mandataire: Thérond, Gérard Raymond

(56) Documents cités:
- EP-A- 0 926 574
- EP-A- 0 933 663
- EP-A- 0 935 155

## Description

La présente invention concerne un ensemble d'affichage comprenant deux dispositifs d'affichage superposés et, plus particulièrement, un tel ensemble comportant des moyens permettant de faire apparaître sélectivement à un observateur l'un des dispositifs d'affichage à l'exclusion de l'autre.

La présente invention concerne également une pièce d'horlogerie comprenant un ensemble d'affichage du genre susmentionné et, plus particulièrement, un tel ensemble d'affichage dans lequel un dispositif d'affichage analogique est combiné à un dispositif d'affichage numérique.

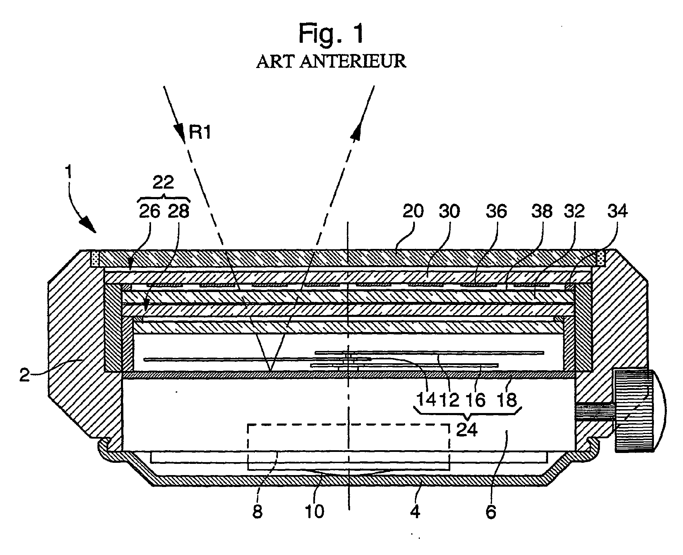

On connaît déjà par le brevet européen EP 0 926 574 au nom de la demanderesse un ensemble d'affichage comprenant deux dispositifs d'affichage superposés. Cet ensemble d'affichage est représenté à la figure 1 annexée à la présente demande de brevet.

En se référant à la figure 1, on voit une pièce d'horlogerie du type montre-bracelet désignée dans son ensemble par la référence numérique générale 1. Cette montre 1 comprend classiquement une boîte 2 dans le fond 4 de laquelle sont disposés un mouvement d'horlogerie électronique 6 et une pile 8 qui prend appui sur le fond 4 par l'intermédiaire d'un ressort de contact 10. Le mouvement 6 comprend des circuits électroniques garde-temps associés, via un circuit de commande, à un dispositif d'entraînement (non représenté) d'une aiguille des secondes 12, d'une aiguille des minutes 14 et d'une aiguille des heures 16 qui se déplacent au-dessus d'un cadran 18 qui porte des heures index (non représentés). La boîte 2 est également fermée de façon classique par une glace 20 recouvrant la totalité du cadran 18.

La montre 1 comprend en outre un ensemble d'affichage comprenant deux dispositifs d'affichage superposés respectivement supérieur 22 et inférieur 24.

Dans l'exemple représenté à la figure 1, le dispositif d'affichage inférieur 24 comprend les moyens d'affichage analogiques de l'heure formés par les aiguilles 12, 14 et 16 et le cadran 18.

Selon l'invention décrite dans le brevet européen EP 0 926 574, le dispositif d'affichage supérieur 22 comprend une double structure formée d'une cellule d'affichage 26 disposée au-dessus d'une valve optique 28, ce dispositif d'affichage 22 s'étendant entre le dispositif d'affichage inférieur 24 et la glace 20.

Le dispositif d'affichage supérieur 22 est agencé d'une part de façon que la cellule d'affichage 26, disposée entre la glace 20 et la valve optique 28, ainsi que cette dernière soient transparentes dans un premier état de commutation de la cellule 26 et de la valve 28, de façon à rendre visibles les informations affichées par le dispositif d'affichage inférieur 24, à savoir les aiguilles 12, 14 et 16 et le cadran 18.

D'autre part, le dispositif d'affichage supérieur 22 est agencé de façon que la cellule d'affichage 22 affiche une information, par exemple du type alphanumérique, et que la valve 28 masque le dispositif d'affichage inférieur 24 dans un deuxième état de commutation.

Grâce à ces caractéristiques, il est possible d'utiliser sélectivement soit le dispositif d'affichage inférieur 24, soit le dispositif d'affichage supérieur 22. Si l'on choisit d'utiliser le dispositif d'affichage inférieur 24, le dispositif d'affichage supérieur 22 peut être commuté dans son premier état dans lequel il est transparent, de sorte que les informations affichées par le dispositif d'affichage inférieur 24 sont visibles. Si l'on choisit en revanche d'utiliser l'affichage supérieur 22, la valve optique 28 est alors commutée dans le deuxième état dans lequel elle est opaque et réfléchissante pour masquer totalement le dispositif d'affichage inférieur 24, tandis que la cellule 26 du dispositif d'affichage supérieur 22 peut afficher les informations désirées.

Selon le mode de réalisation particulier représenté à la figure 1, la cellule 26 est une cellule d'affichage du type à cristaux liquides. La cellule 26 comprend un substrat avant 30 transparent, un substrat arrière 32 également transparent, et un cadre de scellement 34 formant des moyens d'espacement et de fermeture et délimitant avec les substrats 30 et 32 une cavité fermée dans laquelle se trouve une couche de cristaux liquides. Les faces en regard des substrats 30 et 32 comprennent des électrodes transparentes respectivement 36 et 38, réalisées par exemple en oxyde d'indium/étain. Dans l'exemple illustré, le substrat avant 30 porte des électrodes configurées en digits formés chacun de segments permettant d'afficher des caractères alphanumériques, tandis que le substrat arrière 32 porte une électrode s'étendant sur toute sa surface.

Lorsque l'on applique ou que l'on supprime une tension entre l'électrode 38 et certaines des électrodes 36, on fait passer les cristaux liquides se trouvant entre ces électrodes 36 et 38 alternativement d'un état absorbant à un état transparent ou inversement, selon le type de cristaux liquides en question et/ou la présence et la disposition de polariseurs associés à la cellule. Il est ainsi possible d'afficher des informations en clair sur fond sombre ou en sombre sur fond clair.

Dans tout ce qui suit, les éléments identiques à ceux décrits précédemment seront désignés par les mêmes références numériques.

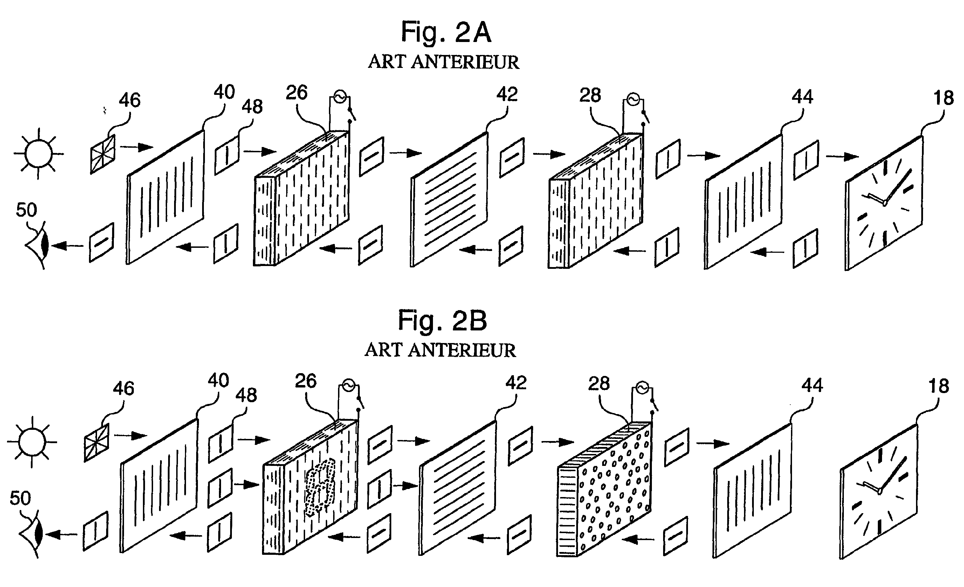

Dans l'exemple représenté aux figures 2A et 2B annexées à la présente demande de brevet, la cellule d'affichage 26 est une cellule à cristaux liquides de type nématique en hélice dont les surfaces extérieures respectives des substrats 30 et 32 sont munies de polariseurs absorbants 40 et 42 à orientations croisées. Ainsi, la cellule 26 est totalement transparente dans le premier état de commutation (figure 2A), lorsqu'aucune tension n'est appliquée aux bornes de ses électrodes 36, 38 (état non commuté), et est absorbante ou diffusante dans le deuxième état de commutation (figure 2B), lorsqu'une tension est appliquée aux bornes de ses électrodes 36, 38 (état commuté). Dans l'exemple représenté, la valve optique comprend, en partant du côté du cadran 18, un polariseur réflectif 44 et une cellule à cristaux liquides du type nématique en hélice. La valve 28 est donc transparente dans l'état non commuté (figure 2A), et opaque et réfléchissante dans l'état commuté (figure 2B).

Dans le premier état de commutation représenté à la figure 2A, la lumière naturelle non polarisée, désignée par la référence numérique 46, est polarisée verticalement par le premier polariseur absorbant 40. La direction de polarisation de la lumière, désignée par la référence 48, est ensuite tournée de 90° lors de son passage à travers la cellule d'affichage 26, puis est transmise sans modification par le second polariseur absorbant 42. La lumière polarisée 48 est ensuite à nouveau tournée de 90° lors de son passage à travers la valve optique 28, puis est transmise sans modification par le polariseur réflectif 44 jusqu'au cadran 18. La lumière suit le même chemin lors de son trajet retour, de sorte que le cadran est visible pour un observateur 50.

En revanche, lorsque la cellule 26 et la valve 28 sont dans l'état commuté, le cadran est totalement masqué. En effet, comme on le voit sur la figure 2B, la lumière polarisée verticalement qui traverse la cellule 26 dans les zones commutées de cette dernière n'est pas modifiée, de sorte qu'elle est absorbée par le polariseur absorbant 40. Dans le même temps, la lumière qui traverse la cellule 26 en dehors des zones commutées de celle-ci est tournée de 90° comme déjà expliqué ci-dessus, puis est transmise sans modification par le polariseur absorbant 42 jusqu'à la valve 28. La valve 28 étant à l'état commuté, la lumière polarisée la traverse sans être modifiée et est totalement réfléchie par le polariseur réflectif 44. Le cadran 18 est ainsi masqué, et les informations sont affichées en sombre sur un fond clair ayant un aspect miroir.

La forme de réalisation décrite ci-dessus présente plusieurs inconvénients.

L'aspect miroir du fond sur lequel se détachent les informations affichées par la cellule d'affichage 26 est éblouissant et rend donc la lecture de ces informations peu aisées, et ce d'autant plus que la luminosité ambiante est forte.

D'autre part, comme la réflexion de la lumière se fait sur le polariseur réflectif 44, et donc à une certaine distance de la cellule d'affichage 26, typiquement de l'ordre de deux à trois millimètres, les images des segments commutés de la cellule 26 apparaissent en projection sur ledit polariseur réflectif 44, ce qui conduit au dédoublement optique de l'information affichée. Ceci nuit non seulement à l'esthétique de la montre mais aussi, bien sûr, à la lisibilité de l'information affichée.

Enfin, lorsqu'on regarde la montre sous certains angles, le dispositif d'affichage inférieur 24 reste visible bien que le dispositif d'affichage supérieur 22 soit à l'état commuté dans lequel il doit normalement complètement masquer ledit dispositif inférieur 24.

La présente invention a pour but de remédier aux inconvénients de l'art antérieur susmentionnés en fournissant un ensemble d'affichage comportant deux dispositifs d'affichage superposés, respectivement inférieur et supérieur, dans lequel il est possible de faire apparaître à un observateur sélectivement des informations affichées par l'un des dispositifs d'affichage à l'exclusion de celles affichées par l'autre dispositif d'affichage, ceci avec une meilleure lisibilité des informations affichées par le dispositif d'affichage en question.

La présente invention a également pour but de fournir un ensemble d'affichage dans lequel le dispositif d'affichage supérieur est un dispositif à cristaux liquides ayant un excellent contraste d'affichage.

La présente invention a également pour but de fournir une pièce d'horlogerie équipée d'un tel ensemble d'affichage ayant un aspect esthétique amélioré.

A cet effet, la présente invention a pour objet un ensemble d'affichage comprenant deux dispositifs d'affichage superposés respectivement supérieur et inférieur, le dispositif d'affichage supérieur comprenant une structure double formée d'une cellule d'affichage disposée au-dessus d'une valve optique, ladite structure double étant agencée de façon que ladite cellule et ladite valve soient transparentes dans un premier état pour rendre visible le dispositif d'affichage inférieur, et de façon que la cellule affiche une information et que la valve soit opaque et masque au moins partiellement le dispositif d'affichage inférieur dans un second état, des moyens de commande fournissant une tension de commande pour faire passer la cellule d'affichage et la valve optique du premier état au deuxième état et inversement, caractérisé en ce que la cellule d'affichage est du type réfléchissant à l'état commuté, et en ce que la valve optique est formée d'une cellule présentant un état absorbant dans l'état commuté.

Grâce à ces caractéristiques, la réflexion de la lumière incidente pénétrant dans l'ensemble d'affichage selon l'invention ne se fait plus sur un polariseur réflectif placé derrière la valve optique comme c'était le cas dans l'art antérieur, mais directement au niveau de la cellule d'affichage lorsque celle-ci est commutée dans le deuxième état dans lequel elle affiche une information. Ceci permet donc d'éliminer toute projection parasite des zones commutées sur le polariseur réflectif, et d'éviter ainsi le double affichage de ces zones pour l'observateur.

D'autre part, contrairement à l'art antérieur où les informations s'affichaient en sombre sur un fond totalement réfléchissant, seuls les segments commutés de la cellule d'affichage sont réflectifs et s'affichent en clair sur un fond sombre constitué par la valve optique qui est absorbante dans le deuxième état de commutation. Une telle structure est donc moins éblouissante pour l'observateur. Elle permet également d'augmenter la luminosité de l'information affichée et, par conséquent, sa lisibilité.

Enfin, comme la valve optique est absorbante dans l'état commuté, il n'est plus possible de voir le dispositif d'affichage inférieur à travers celle-ci, et ce quel que soit l'angle sous lequel on regarde la structure d'affichage.

Selon un mode de réalisation avantageux, la cellule d'affichage et la valve optique sont dans un état transparent en l'absence de tension appliquée par les moyens de commande. Ainsi, l'information affichée par le dispositif d'affichage inférieur est visible en permanence, sans que le dispositif d'affichage supérieur ne consomme d'énergie. Ceci est particulièrement avantageux dans le cadre d'une application à un objet portable tel qu'une montre-bracelet.

Selon une autre caractéristique de l'invention, la cellule d'affichage est formée d'une cellule du type nématique en hélice, d'un polariseur absorbant placé devant la cellule, et d'un polariseur réflectif placé derrière la cellule.

Selon encore une autre caractéristique de l'invention, la valve optique est formée d'une cellule à cristaux liquides du type nématique en hélice, et d'un polariseur absorbant placé derrière la cellule.

D'autres caractéristiques et avantages de la présente invention apparaîtront plus clairement à la lecture de la description détaillée qui suit d'un exemple de réalisation de l'ensemble d'affichage selon l'invention, cet exemple étant donné à titre purement illustratif et non limitatif, en liaison avec les dessins annexés dans lesquels :
- la figure 1, déjà citée, est une vue en coupe d'une montre-bracelet équipée d'un ensemble d'affichage selon l'art antérieur, l'ensemble étant commuté dans un premier état laissant apparaître le dispositif d'affichage inférieur;
- les figures 2A et 2B, déjà citées, sont des vues schématiques de l'ensemble d'affichage de la figure 1 commuté respectivement dans un premier état dans lequel il est transparent, de sorte que les informations affichées par le dispositif d'affichage inférieur sont visibles, et dans un second état dans lequel la valve optique est opaque et réfléchissante pour masquer totalement le dispositif d'affichage inférieur, tandis que la cellule d'affichage du dispositif d'affichage supérieur peut afficher les informations désirées, et

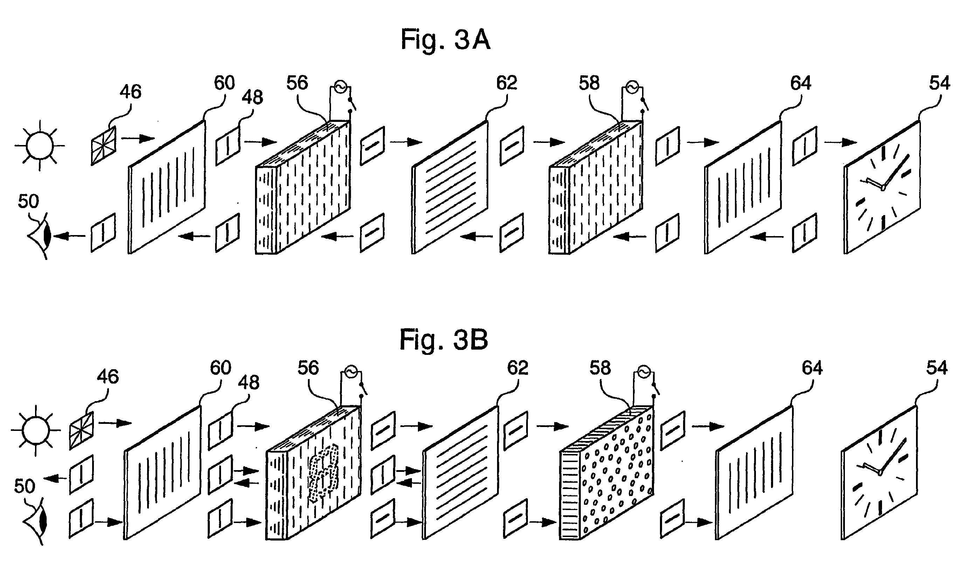

- les figures 3A et 3B sont des vues schématiques de l'ensemble d'affichage selon l'invention commuté respectivement dans un premier état dans lequel il est transparent, de sorte que les informations affichées par le dispositif d'affichage inférieur sont visibles, et dans un second état dans lequel la valve optique est absorbante pour masquer totalement le dispositif d'affichage inférieur, tandis que les segments commutés de la cellule d'affichage du dispositif d'affichage supérieur sont réfléchissantes pour afficher les informations désirées.

La présente invention procède de l'idée générale inventive qui consiste à superposer deux dispositifs d'affichage, respectivement supérieur et inférieur, l'un de ces dispositifs d'affichage pouvant apparaître sélectivement à un observateur à l'exclusion de l'autre. A cet effet, le dispositif d'affichage supérieur comprend une double structure formée d'une cellule d'affichage disposée au-dessus d'une valve optique. Ce dispositif d'affichage supérieur est agencé de sorte que, dans un premier état, la cellule d'affichage et la valve optique sont toutes deux transparentes pour laisser apparaître les informations affichées par le dispositif d'affichage inférieur. D'autre part, le dispositif d'affichage supérieur est agencé de façon que, dans un second état, la cellule d'affichage fonctionne en contraste négatif, c'est-à-dire que les segments commutés sont réfléchissants et se détachent sur un fond sombre constitué par la valve optique qui est absorbante et qui masque le dispositif d'affichage inférieur.

La description de l'invention est faite dans le cadre d'une application à une pièce d'horlogerie telle qu'une montre-bracelet. Il va toutefois de soi que l'invention n'est pas limitée à cette application et qu'elle pourra être avantageusement utilisée dans le cadre de toute autre application nécessitant l'affichage d'informations telle que, par exemple, des instruments de mesure.

Dans l'exemple représenté aux figures 3A et 3B, l'ensemble d'affichage selon l'invention comprend classiquement deux dispositifs d'affichage superposés respectivement supérieur 52 et inférieur 54. Le dispositif d'affichage inférieur 54 comprend des moyens d'affichage analogiques de l'heure formés par des aiguilles se déplaçant au-dessus d'un cadran qui porte des heures index. Il va néanmoins de soi que le dispositif d'affichage inférieur 54 peut être formé par un dispositif d'affichage quelconque, par exemple un dispositif d'affichage numérique du type à cristaux liquides. Ce dispositif d'affichage inférieur 54 peut également comprendre une combinaison de moyens d'affichage analogiques et numériques ou encore un élément décoratif, par exemple une image, une figure ou autre. En ce qui concerne le dispositif d'affichage supérieur 52, il comprend une double structure formée d'une cellule d'affichage 56 disposée au-dessus d'une valve optique 58.

En se référant aux figures 3A et 3B, la cellule d'affichage 56 est une cellule à cristaux liquides de type nématique en hélice (TN) dont les surfaces extérieures des substrats avant et arrière sont munies d'un polariseur absorbant 60 et d'un polariseur réflectif 62 respectivement. La valve optique comprend, quant à elle, en partant du côté du cadran 54, un polariseur absorbant 64 et une cellule à cristaux liquides de type nématique en hélice.

Dans le premier état de commutation représenté à la figure 3A, la lumière naturelle non polarisée 46 est polarisée verticalement par le polariseur absorbant 60. La lumière polarisée 48 est ensuite tournée de 90° lors de son passage à travers la cellule d'affichage 56, puis est transmise sans modification par le polariseur réflectif 62. La lumière polarisée est ensuite à nouveau tournée de 90° lors de son passage à travers la valve optique 58, puis est transmise sans modification par le polariseur absorbant 64 jusqu'au cadran 54. La lumière suit le même chemin lors de son trajet retour, de sorte que le cadran 54 est visible pour l'observateur 50.

En revanche, lorsque la cellule d'affichage 56 et la valve optique 58 sont dans l'état commuté, le cadran 54 est totalement masqué. En effet, comme on le voit sur la figure 3B, la lumière polarisée verticalement qui traverse la cellule 56 dans les zones commutées de cette dernière n'est pas modifiée, de sorte qu'elle est réfléchie par le polariseur réflectif 62. Dans le même temps, la lumière qui traverse la cellule 56 en dehors des zones commutées de celle-ci est tournée de 90°, puis est transmise sans modification par le polariseur réflectif 62. La valve 58 étant à l'état commuté, la lumière polarisée la traverse sans être modifiée et est alors totalement absorbée par le polariseur absorbant 64. Le cadran 54 est ainsi masqué, et la cellule d'affichage 56 fonctionne en contraste négatif, c'est-à-dire que les segments commutés sont réfléchissants et se détachent sur un fond sombre constitué par la valve optique 58 qui absorbe la lumière et qui masque le cadran 54.

Les polariseurs absorbants 60 et 64 utilisés dans le cadre de la présente invention peuvent être ceux fabriqués par les sociétés japonaises Nitto Denko, Sanritz ou encore Sumitomo. De façon avantageuse, le polariseur réflectif 62 peut être, par exemple, du type multicouches commercialisé sous le nom DBEF (Dual Brigthness Enhancement Film) par la société 3M, ou bien du type holographique commercialisé par la société Polaroïd.

Il va de soi que la cellule 56 et la valve 58 peuvent être d'un autre type dès lors que dans un premier état de commutation, la cellule 56 et la valve 58 sont transparentes, et que dans un deuxième état de commutation, la cellule 56 est réfléchissante et la valve 58 est absorbante.

On pourra ainsi notamment choisir des cellules de type Super Twist-Nematic (STN), Guest-Host (GH), à biréfringence contrôlée électriquement (BCE), à texture cholestérique, ferroélectrique, électrochromique, électrolytique, électrocapillaire. La valve optique 58 peut être du même type que la cellule d'affichage 56. On peut également combiner deux cellules de types différents choisies parmi le groupe de cellules énumérées ci-dessus.

La structure et le fonctionnement de ces types de cellules sont bien connus de l'homme du métier et ne seront pas décrits en détail dans cette description.

Pour une description complète de la structure et du fonctionnement d'une cellule de type STN, on se référera par exemple au brevet européen EP 0 131 216 qui est inclus ici par référence.

Pour une description complète de la structure et du fonctionnement d'une cellule de type GH, on se référera par exemple pour une cellule GH à contraste positif, c'est-à-dire qui affiche en foncé sur fond clair, au brevet US 4,257,682 qui est inclus ici par référence, et pour une cellule GH à contraste négatif, c'est-à-dire qui affiche en clair sur fond foncé, à la publication de G.H. Heilmeier et L.A. Zanomi intitulée "Guest-Host Interaction in Nematic Liquid Crystals a New Electrooptical Effect" publiée dans Appl. Phys. Lett. vol. 13, No 3, pages 91-92, année 1968.

Pour une description complète de la structure et du fonctionnement d'une cellule de type BCE, on se référera par exemple au volume 3 de l'ouvrage intitulé "Liquid Crystals Applications and Uses" édité par B. Bahadur aux pages 254-300 qui est inclus ici par référence.

Pour une description complète de la structure et du fonctionnement d'une cellule de type à texture cholestérique, on se référera par exemple aux brevets américain US 5,188,760 et européen EP 0 451 905 qui sont inclus ici par référence.

Pour une description complète de la structure et du fonctionnement d'une cellule de type ferroélectrique, on se référera par exemple au volume 1 de l'ouvrage intitulé "Liquid Crystals Applications and Uses" édité par B. Bahadur aux pages 307-356 qui est inclus ici par référence.

Tous les types de cellules décrits ci-dessus peuvent bien entendu être adressés passivement par un réseau d'électrodes matriciel ou encore adressés activement par des éléments non linéaires tels que des transistors en couches minces (TFT, MIM), ou des diodes.

La valve optique 58 peut, par exemple, être formée d'une cellule électrolytique qui est transparente dans l'état non commuté, et qui est absorbante dans l'état commuté. Une telle valve 58 comprend une solution électrolytique d'un sel de métal dissous dans un solvant placé entre deux électrodes. Lorsque la valve 58 est dans un état commuté, le métal de la solution se dépose sur toute la surface de l'une des électrodes, et rend ainsi la valve 58 absorbante. Lorsque la valve 58 est dans un état non commuté, le métal se dissous à nouveau dans la solution, et la cellule redevient transparente. Une telle valve 58 est par exemple décrite dans la publication de J. Duchêne et al. intitulée "Electrolytic Display", publiée dans SID 1978 aux pages 34 à 37 qui est inclus ici par référence.

Bien entendu, selon une variante de réalisation, la valve optique 58 peut être formée d'une cellule électrocapillaire au mercure comprenant un film capillaire disposé entre deux substrats portant des électrodes qui, dans l'état commuté de la cellule, ne mouille pas la surface des substrats, de sorte que la cellule est transparente et qui, dans l'état non commuté de la cellule, mouille la totalité de la surface des substrats pour la rendre absorbante. Une telle cellule est par exemple décrite dans le brevet US 4,583,824 qui est inclus ici par référence.

Selon une autre variante de réalisation, la valve optique peut, par exemple, être formée d'une cellule électrochromique connue de l'homme de l'art et décrite dans la publication de C.M. Lampert et C.G. Granquist intitulée "Large-area Chromogenics : Materials and Devices for Transmittance Control" publiée dans SPIE press, volume 15.4.1988 qui est inclus ici par référence.

Selon encore une autre variante de réalisation, la valve optique 58 peut être formée d'un réflecteur commutable comprenant un empilement formé d'un polariseur, d'une cellule à cristaux liquides du type nématique en hélice (TN), d'une lame quart d'onde, et d'un film cholestérique tel que le réflecteur décrit dans la publication de T.J. Scheffer intitulée "Twisted Nematic Display with Cholesteric Reflector" publiée dans J. Phys. Appl. Phy., Vol. 8, 1975 qui est inclus ici par référence. De préférence, le polariseur est du type à efficacité de polarisation et transmission élevée par exemple tel que le polariseur commercialisé par la société Sanritsu, Japon sous la référence LLC₂5618SF. De façon avantageuse, on pourra également intégrer la lame quart d'onde et le film cholestérique en un seul élément, par exemple tel que le produit TRANSMAX^{®} commercialisé par Merck.

On notera également à ce propos que, selon une autre variante, la cellule à cristaux liquides du type nématique en hélice (TN) décrite dans la publication de Scheffer peut être remplacée par un dispositif d'affichage en couleurs tel que ceux décrits dans le brevet européen EP 0 600 349 qui est également inclus ici par référence.

Dans le cadre de l'invention, le réflecteur commutable est avantageusement transparent dans l'état non commuté, et absorbant dans l'état commuté.

Les valves optiques 58 qui viennent d'être décrites sont toutes transparentes dans l'état non commuté, et peuvent avantageusement être combinées à des cellules 56 qui sont également transparentes dans un état non commuté. Ainsi, dans le cadre de l'application à une pièce d'horlogerie, le dispositif d'affichage inférieur 54 peut être visible en permanence avec une consommation d'énergie minimum, dans la mesure où seul ledit dispositif d'affichage inférieur 54 a besoin d'être alimenté, le dispositif d'affichage supérieur 52 n'étant alimenté que lorsque l'utilisateur souhaite lire une information délivrée par ce dispositif d'affichage 52.

Selon encore une variante de réalisation, la valve optique 58 peut être réalisée au moyen d'un film cholestérique commutable qui est transparent dans un état commuté, et absorbant dans un état non commuté. Un tel film cholestérique est par exemple décrit dans le brevet européen EP 0 643 121 qui est inclus ici par référence.

La présente invention concerne également une pièce d'horlogerie comprenant une boîte fermée par une glace et un fond dans lequel est logé un mouvement d'horlogerie associé à un dispositif d'affichage de grandeurs temporelles, cette pièce d'horlogerie comprenant un ensemble d'affichage tel que décrit ci-dessus, le dispositif d'affichage inférieur 54 étant formé par ledit dispositif d'affichage de grandeurs temporelles, et le dispositif d'affichage supérieur 52 s'étendant entre la glace et ledit dispositif d'affichage de grandeurs temporelles. Ce dispositif d'affichage de grandeurs temporelles peut comprendre un cadran ainsi qu'une aiguille des heures et une aiguille des minutes qui se déplacent au dessus du cadran.

Enfin, selon une forme de réalisation particulièrement avantageuse, la glace est formée par le dispositif d'affichage supérieur 52.

Il va de soi que diverses variantes et modifications simples entrent dans le cadre de la présente invention.

## Revendications

1. Ensemble d'affichage comprenant deux dispositifs d'affichage superposés respectivement supérieur (52) et inférieur (54), le dispositif d'affichage supérieur (52) comprenant une structure double formée d'une cellule d'affichage (56) disposée au-dessus d'une valve optique (58), ladite structure double étant agencée de façon que ladite cellule (56) et ladite valve (58) soient transparentes dans un premier état pour rendre visible le dispositif d'affichage inférieur (54), et de façon que la cellule (56) affiche une information et que la valve (58) soit opaque et masque au moins partiellement le dispositif d'affichage inférieur (54) dans un second état, des moyens de commande fournissant une tension de commande pour faire passer la cellule d'affichage (56) et la valve optique (58) du premier état au deuxième état et inversement, **caractérisé en ce que** la cellule d'affichage (56) est du type réfléchissant à l'état commuté, et **en ce que** la valve optique (58) est formée d'une cellule présentant un état absorbant dans l'état commuté.

2. Ensemble d'affichage selon la revendication 1, **caractérisé en ce que** la cellule (56) et la valve optique (58) sont dans le premier état transparent en l'absence de tension appliquée par lesdits moyens de commande.

3. Ensemble d'affichage selon l'une quelconque des revendications 1 ou 2, **caractérisé en ce que** ladite cellule d'affichage (56) est une cellule à cristaux liquides choisie parmi les cellules du type nématique en hélice (TN), STN, Guest-Host, à biréfringence contrôlée électriquement (BCE), à texture cholestérique, ferroélectrique, électrochromique, électrolytique, électrocapillaire.

4. Ensemble d'affichage selon la revendication 3, **caractérisé en ce que** la cellule d'affichage (56) est formée d'une cellule de type nématique en hélice, d'un polariseur absorbant (60) placé devant la cellule, et d'un polariseur réflectif (62) placé derrière la cellule.

5. Ensemble d'affichage selon l'une quelconque des revendications 1 à 4, **caractérisé en ce que** la valve optique (58) est formée d'une cellule à cristaux liquides du type nématique en hélice, et d'un polariseur absorbant (64) placé derrière la cellule.

6. Ensemble d'affichage selon l'une quelconque des revendications 1 à 4, **caractérisé en ce que** la valve optique (58) est formée d'une cellule du type nématique en hélice, d'un polariseur placé devant la cellule, d'une lame quart d'onde et d'un film cholestérique placés successivement derrière la cellule (56).

7. Ensemble d'affichage selon l'une quelconque des revendications 1 à 4, **caractérisé en ce que** la valve optique (58) est formée d'une cellule électrolytique.

8. Ensemble d'affichage selon l'une quelconque des revendications 1 à 4, **caractérisé en ce que** la valve optique (58) est formée d'une cellule électrochromique.

9. Ensemble d'affichage selon l'une quelconque des revendications 1 à 4, **caractérisé en ce que** la valve optique (58) est formée d'une cellule électrocapillaire au mercure.

10. Ensemble d'affichage selon l'une quelconque des revendications 1 ou 2, **caractérisé en ce que** la valve optique (58) est dans le premier état en l'absence de tension appliquée par lesdits moyens de commande, et **en ce que** ladite valve optique (58) est formée d'un film cholestérique commutable.

11. Ensemble d'affichage selon l'une quelconque des revendications précédentes, **caractérisé en ce que** le dispositif d'affichage inférieur (54) est un dispositif d'affichage choisi parmi l'ensemble comprenant un dispositif analogique, numérique, une combinaison de ces derniers, et un élément décoratif.

12. Pièce d'horlogerie comprenant une boîte fermée par une glace et un fond dans lequel est logé un mouvement d'horlogerie associé à un dispositif d'affichage de grandeurs temporelles, **caractérisée en ce qu'**elle comprend un ensemble d'affichage selon l'une quelconque des revendications 1 à 11, ledit dispositif d'affichage inférieur (54) étant formé par ledit dispositif d'affichage de grandeurs temporelles, et ledit dispositif d'affichage supérieur (52) s'étendant entre la glace et ledit dispositif d'affichage de grandeurs temporelles.

13. Pièce d'horlogerie selon la revendication 12, **caractérisée en ce que** ledit dispositif d'affichage de grandeurs temporelles comprend un cadran ainsi qu'une aiguille des heures et une aiguille des minutes qui se déplacent au dessus du cadran.

14. Pièce d'horlogerie selon l'une quelconque des revendications 12 ou 13, **caractérisée en ce que** la glace est formée par le dispositif d'affichage supérieur (52).

## Claims

1. Display assembly including two superposed, respectively top (52) and bottom (54), display devices, the top display device (52) including a double structure formed of a display cell (56) arranged above an optical valve (58), said double structure being arranged so that said cell (56) and said valve (58) are transparent in a first state to make the bottom display device (54) visible, and so that the cell (56) displays an item of data and so that the valve (58) is opaque and at least partially masks the bottom display device (54) in a second state, control means supplying a control voltage to cause the display cell (56) and the optical valve (58) to switch from the first state to the second state and vice versa, **characterized in that** the display cell (56) is of the reflective type in the switched state, and **in that** the optical valve (58) is formed of a cell having an absorbent state in the switched state.

2. Display assembly according to claim 1, **characterized in that** the cell (56) and the optical valve (58) are in the first transparent state in the absence of any voltage applied by said control means.

3. Display assembly according to any one of claims 1 or 2, **characterized in that** said display cell (56) is a liquid crystal cell selected from among cells of the twisted nematic (TN), STN, Guest-Host, electrically controlled birefringence (ECB), cholesteric texture, ferroelectric, electrochromic, electrolytic, electrocapillary type.

4. Display assembly according to claim 3, **characterized in that** the display cell (56) is formed of a twisted nematic type cell, an absorbent polariser (60) placed in front of the cell, and a reflective polariser (62) placed behind the cell.

5. Display assembly according to any one of claims 1 to 4, **characterized in that** the optical valve (58) is formed of a twisted nematic type liquid crystal cell, and an absorbent polariser (64) placed behind the cell.

6. Display assembly according to any one of claims 1 to 4, **characterized in that** the optical valve (58) is formed of a twisted nematic type cell, a polariser placed in front of the cell, a quarterwave plate and a cholesteric film placed in succession behind the cell (56).

7. Display assembly according to any one of claims 1 to 4, **characterized in that** the optical valve (58) is formed of an electrolytic cell.

8. Display assembly according to any one of claims 1 to 4, **characterized in that** the optical valve (58) is formed of an electrochromicl cell.

9. Display assembly according to any one of claims 1 to 4, **characterized in that** the optical valve (58) is formed of a mercury electrocapillary cell.

10. Display assembly according to any one of claims 1 or 2, **characterized in that** the optical valve (58) is in the first state in the absence of any voltage applied by said control means, and **in that** said optical valve (58) is formed of a switchable cholesteric film.

11. Display assembly according to any one of the preceding claims, **characterized in that** the bottom display device (54) is a display device selected from among the set including an analogue device, digital device or a combination thereof, and a decorative element.

12. Timepiece including a case closed by a crystal and a back cover in which is housed a clockwork movement associated with a display device of time related information, **characterized in that** it includes a display assembly according to any one of claims 1 to 11, said bottom display device (54) being formed by said display device of time related information, and said top display device (52) extending between the crystal and said display device of time related information.

13. Timepiece according to claim 12, **characterized in that** said display device of time related information includes a dial as well as an hour hand and a minute hand which move above the dial.

14. Timepiece according to any one of claims 12 or 13, **characterized in that** the crystal is formed by the top display device (52).

## Patentansprüche

1. Anzeigeanordnung, die zwei übereinander angeordnete Anzeigevorrichtungen, nämlich eine obere Anzeigevorrichtung (52) und eine untere Anzeigevorrichtung (54), umfasst, wobei die obere Anzeigevorrichtung (52) eine Doppelstruktur besitzt, die aus einer Anzeigezelle (56) gebildet ist, die über einem optischen Ventil (58) angeordnet ist, wobei die Doppelstruktur in der Weise beschaffen ist, dass in einem ersten Zustand die Zelle (56) und das Ventil (58) lichtdurchlässig sind, um die untere Anzeigevorrichtung (54) sichtbar zu machen, und in der Weise, dass in einem zweiten Zustand die Zelle (56) eine Information anzeigt und das Ventil (58) lichtundurchlässig ist und die untere Anzeigevorrichtung (54) wenigstens teilweise abdeckt, wobei Steuermittel eine Steuerspannung liefern, um die Anzeigezelle (56) und das optische Ventil (58) von dem ersten Zustand in den zweiten Zustand zu versetzen und umgekehrt, **dadurch gekennzeichnet, dass** die Anzeigezelle (56) vom reflektierenden Typ mit geschaltetem Zustand ist und dass das optische Ventil (58) aus einer Zelle gebildet ist, die im geschalteten Zustand einen absorbierenden Zustand aufweist.

2. Anzeigeanordnung nach Anspruch 1, **dadurch gekennzeichnet, dass** im ersten Zustand die Zelle (56) und das optische Ventil (58) lichtdurchlässig sind, wenn durch die Steuermittel keine Spannung angelegt wird.

3. Anzeigeanordnung nach einem der Ansprüche 1 oder 2, **dadurch gekennzeichnet, dass** die Anzeigezelle (56) eine Flüssigkristallzelle ist, die aus den Zellen folgenden Typs ausgewählt ist: nematisch-schraubenlinienförmig (TN), STN, Guest-Host, mit elektrisch gesteuerter Doppelbrechung (BCE), mit cholesterischer Textur, ferroelektrisch, elektrochromisch, elektrolytisch, elektrokapillar.

4. Anzeigeanordnung nach Anspruch 3, **dadurch gekennzeichnet, dass** die Anzeigezelle (56) aus einer Zelle des nematisch-schraubenlinienförmigen Typs, aus einem absorbierenden Polarisator (60), der vor der Zelle angeordnet ist, und aus einem reflektierenden Polarisator (62), der hinter der Zelle angeordnet ist, gebildet ist.

5. Anzeigeanordnung nach einem der Ansprüche 1 bis 4, **dadurch gekennzeichnet, dass** das optische Ventil (58) aus einer Flüssigkristallzelle des nematisch-schraubenlinienförmigen Typs und aus einem absorbierenden Polarisator (64), der hinter der Zelle angeordnet ist, gebildet ist.

6. Anzeigeanordnung nach einem der Ansprüche 1 bis 4, **dadurch gekennzeichnet, dass** das optische Ventil (58) aus einer Zelle des nematisch-schraubenlinienförmigen Typs, aus einem Polarisator, der vor der Zelle angeordnet ist, aus einem Viertelwellenlängenplättchen und aus einer cholesterischen dünnen Schicht, die nacheinander hinter der Zelle (56) angeordnet sind, gebildet ist.

7. Anzeigeanordnung nach einem der Ansprüche 1 bis 4, **dadurch gekennzeichnet, dass** das optische Ventil (58) aus einer elektrolytischen Zelle gebildet ist.

8. Anzeigeanordnung nach einem der Ansprüche 1 bis 4, **dadurch gekennzeichnet, dass** das optische Ventil (58) aus einer elektrochromischen Zelle gebildet ist.

9. Anzeigeanordnung nach einem der Ansprüche 1 bis 4, **dadurch gekennzeichnet, dass** das optische Ventil (58) aus einer elektrokapillaren Zelle mit Quecksilber gebildet ist.

10. Anzeigeanordnung nach einem der Ansprüche 1 oder 2, **dadurch gekennzeichnet, dass** das optische Ventil (58) im ersten Zustand ist, wenn durch die Steuermittel keine Spannung angelegt wird, und dass das optische Ventil (58) aus einer schaltbaren cholesterischen dünnen Schicht gebildet ist.

11. Anzeigeanordnung nach einem der vorhergehenden Ansprüche, **dadurch gekennzeichnet, dass** die untere Anzeigevorrichtung (54) eine Anzeigevorrichtung ist, die aus der Gruppe gewählt ist, die eine analoge Vorrichtung, eine digitale Vorrichtung, eine Kombination aus diesen letzteren und ein Zierelement umfasst.

12. Zeitmessgerät, das ein durch ein Uhrenglas und einen Boden verschlossenes Gehäuse umfasst, in dem ein Uhrwerk untergebracht ist, dem eine Anzeigevorrichtung mit zeitlichen Größen zugeordnet ist, **dadurch gekennzeichnet, dass** es eine Anzeigeanordnung nach einem der Ansprüche 1 bis 11 umfasst, wobei die untere Anzeigevorrichtung (54) durch die Anzeigevorrichtung mit zeitlichen Größen gebildet ist und die obere Anzeigevorrichtung (52) sich zwischen dem Uhrenglas und der Anzeigevorrichtung mit zeitlichen Größen erstreckt.

13. Zeitmessgerät nach Anspruch 12, **dadurch gekennzeichnet, dass** die Anzeigevorrichtung mit zeitlichen Größen ein Zifferblatt sowie einen Stundenzeiger und einen Minutenzeiger, die sich über dem Zifferblatt bewegen, umfasst.

14. Zeitmessgerät nach einem der Ansprüche 12 oder 13, **dadurch gekennzeichnet, dass** das Uhrenglas durch die obere Anzeigevorrichtung (52) gebildet ist.
